# EUROPÄISCHE PATENTANMELDUNG

(11) **EP 4 624 684 A1**
(43) Veröffentlichungstag der Anmeldung: **01.10.2025**
(21) Anmeldenummer: 24166310.3
(22) Anmeldetag: 26.03.2024
(51) Int. Cl.: E03C 1/122, E03F 5/042, E03F 5/22, E03F 7/04, F16K 15/06

(54) **VERTIKALER RÜCKSTAUVERSCHLUSS MIT AUSLASSSEITIG ABGESCHIRMTER VENTILSTÖSSELFÜHRUNG**

(71) Anmelder: Kessel SE + Co. KG, 85101 Lenting (DE)
(72) Erfinder: Kessel, Bernhard, 85101 Lenting (DE)
(74) Vertreter: Grünecker Patent- und Rechtsanwälte PartG mbB

(57) **Zusammenfassung**

Die Erfindung betrifft einen Rückstauverschluss für den vertikalen Einbau in ein Abwasserrohrgefälle, wobei der Rückstauverschluss in Richtung seines Abwasserdurchlasspfades einen Abwassereinlass gefolgt von einem Abwasserauslass aufweist, und der Abwasserdurchlasspfad in einer vertikalen Einbauorientierung des Rückstauverschlusses zumindest teilweise in Schwerkraftrichtung zeigt, wobei der Rückstauverschluss eine schließbare Ventileinheit zwischen Abwassereinlass und Abwasserauslass aufweist und die Ventileinheit in einer vertikalen Einbauorientierung des Rückstauverschlusses mittels eines dichtenden Zusammenspiels eines beweglich geführten Ventilstößels mit einer Ventilsitzöffnung einen Abwasserfluss in Richtung des Abwasserdurchlasspfades erlaubt und in einer Rückstausituation in Richtung entgegen des Abwasserdurchlasspfades sperrt, wobei die Führung des Ventilstößels auslassseitig der Ventilsitzöffnung in einem durch den Ventilstößel zur Ventilsitzöffnung hin abgeschirmten Bereich angeordnet ist. Weiterhin betrifft die Erfindung ein zugehöriges Abwasserhebesystem.

## Beschreibung

Die vorliegende Erfindung betrifft einen Abwasserrückstauverschluss mit den Merkmalen des unabhängigen Anspruchs 1 sowie ein zugehöriges Abwasserhebesystem.

Die EP2177679A1 offenbart beispielsweise einen Rückstauverschluss, welcher auch für sehr verschmutzte Haushaltsabwässer, wie beispielsweise fäkalienhaltiges Abwasser, geeignet ist.

Insgesamt zeigt sich jedoch, dass viele gängige Rückstauverschlüsse Schwächen beim Durchleiten von besonders verschmutzten Abwässern haben, beispielsweise beim Durchleiten von fäkalienhaltigem Abwasser. Hierbei kann es sein, dass sich Schmutzteile an die beweglichen Schließteile des Rückstauverschlusses oder an die Schließdichtungen anhaften und die Funktionsfähigkeit dieser Teile und somit des Rückstauverschlusses behindern. Es werden deswegen konstruktiv aufwändige Vorkehrungen getroffen, die Funktion des Rückstauverschlusses im Rückstaufall zu verbessern beziehungsweise sicherzustellen.

Der vorliegenden Erfindung liegt die Aufgabe zugrunde, die Einsatzzuverlässigkeit eines Abwasserrückstauverschlusses zu verbessern und gleichzeitig den Rückstauverschluss nach Möglichkeit konstruktiv einfach zu gestalten.

Die vorliegende Erfindung löst die genannte Aufgabe mit den Merkmalen des unabhängigen Anspruchs 1.

Die vorliegende Erfindung schlägt einen Rückstauverschluss für den vertikalen Einbau in ein Abwasserrohrgefälle vor, wobei der Rückstauverschluss in Richtung seines Abwasserdurchlasspfades einen Abwassereinlass gefolgt von einem Abwasserauslass aufweist, und der Abwasserdurchlasspfad in einer vertikalen Einbauorientierung des Rückstauverschlusses zumindest teilweise in Schwerkraftrichtung zeigt, wobei der Rückstauverschluss eine schließbare Ventileinheit zwischen Abwassereinlass und Abwasserauslass aufweist und die Ventileinheit in einer vertikalen Einbauorientierung des Rückstauverschlusses mittels eines dichtenden Zusammenspiels eines beweglich geführten Ventilstößels mit einer Ventilsitzöffnung einen Abwasserfluss in Richtung des Abwasserdurchlasspfades erlaubt und in einer Rückstausituation in Richtung entgegen des Abwasserdurchlasspfades sperrt, und wobei die Führung des Ventilstößels auslassseitig der Ventilsitzöffnung in einem durch den Ventilstößel zur Ventilsitzöffnung hin abgeschirmten Bereich angeordnet ist.

Durch das erfindungsgemäße Anordnen der Ventilstößelführung auslassseitig der Ventilsitzöffnung in einem durch den Ventilstößel zur Ventilsitzöffnung hin abgeschirmten Bereich eines vertikalen Rückstauverschlusses, erlaubt es die für die zuverlässige Funktion des Rückstauverschlusses relevante Führung vor dem fallenden Abwasserstrahl zu schützen, wobei hierbei vorteilhafterweise der Ventilstößel selbst den abgeschirmten Bereich durch seinen Projektionsschatten in Richtung entgegen der Ventilsitzöffnung bereitstellt und somit das Risiko des Anhaftens von Verschmutzungen an die beweglichen Teile der Führung reduziert. Dies hilft damit verschmutzungsbedingte Funktionsstörungen zu reduzieren, was die Einsatzzuverlässigkeit erhöht.

Eine Anordnung der Führung im durch den Ventilstößel abgeschirmten Bereich ermöglicht zudem eine kompakte Gestalt des Rückstauverschlusses und eine vorteilhafte Positionierung der Führung in Flucht mit der Ventilsitzöffnung, beispielsweise in Form einer Linearführung.

Gleichzeit ermöglicht die vertikale Einbauorientierung des Rückstauverschlusses, dass die Strömungsgeschwindigkeiten im Rückstauverschluss unter der Hilfe der Schwerkraft hoch sind, sodass das unerwünschte Anhaften von Verschmutzungen an Teilen des Rückstauverschlusses durch eine schnelle Durchspülung des Rückstauverschlusses merklich reduziert werden kann. Zusätzlich hilft die Schwerkraft in der vertikalen Einbauorientierung, Abwasser und darin enthaltene Verschmutzungen schnell aus dem Rückstauverschluss abzutransportieren, was das Risiko des Anhaftens von Verschmutzungen ebenfalls reduziert und zur erhöhten Funktionszuverlässigkeit beiträgt.

Die zuvor genannten Vorteile führen dazu, dass der erfindungsgemäße Rückstauverschluss auch mit besonders problematischem Abwasser, wie beispielsweise fäkalienhaltigem Abwasser ("Schwarzwasser"), zuverlässig verwendet werden kann.

In einer optionalen Ausführungsform kann der Ventilstößel einen zur Ventilsitzöffnung hin geschlossenen und in Richtung entgegen der Ventilsitzöffnung hin offenen Hohlraum aufweisen, wobei die Führung zumindest teilweise im Hohlraum positioniert ist. Eine derartige Ausführung des Ventilstößels mit einem erfindungsgemäßen Hohlraum schirmt die Führung besonders zuverlässig vor dem von der Ventilsitzöffnung kommenden Abwasserschwall ab. Dies gilt nochmals im besonderen Maße, wenn die Führung in einer weiterhin optionalen Ausführungsform vollständig im Hohlraum positioniert ist.

Zudem bildet der Hohlraum im Rückstaufall einen Taucherglockeneffekt, welcher den Hohlraum und darin liegende Teile vor einem Ansteigen des Rückstauwasserpegels schützt. Zudem dient der Hohlraum als Auftriebskörper der im Rückstaufall zusätzliche Schließkraft hin zur Ventilsitzöffnung bereitstellen kann.

In einer weiteren optionalen Ausführungsform ist die Führung in der voll geöffneten Stellung des Ventilstößels, betrachtet quer zur Richtung des Abwasserdurchlasspfades vollständig im Hohlraum positioniert.

Dies schirmt die Führung im besonderen Maße in einer Situation ab, wenn der fallende Abwasserstrahl am intensivsten ist, nämlich wenn der Ventilstößel voll geöffnet ist.

In einer weiteren vorteilhaften Ausführungsform kann sich der Hohlraum zumindest abschnittsweise hin zur Ventilsitzöffnung verjüngen.

Dies reduziert das Risiko, dass im Falle eines Abwasserrückstaus rückstauendes Abwasser von unten tiefer in den Hohlraum eindringt. Durch die Verjüngung des Hohlraums nach oben hin zur Ventilsitzöffnung wird die Luft im taucherglockenartigen Hohlraum schneller durch den Abwasserrückstauspiegel zu einem Druck komprimiert, welcher dem Rückstaudruck standhält und keinen weiteren Pegelanstieg im Hohlraum erlaubt. Dies schützt im Hohlraum angeordnete Bauteile, wie beispielweise die Führung des Ventilstößels vor dem Kontakt mit und dem Eindringen von schmutzigem Rückstauabwasser.

In einer weiteren optionalen Ausführung der Erfindung ist im Bereich der Ventilsitzöffnung eine Abwasserleitfläche vorgesehen, welche durch die Ventilsitzöffnung strömendes Abwasser turbulenzreduzierend an dem geöffneten Ventilstößel vorbeileitet.

Hierdurch werden die an der Ventilsitzöffnung durch einen Ventileffekt entstehenden Turbulenzen im Abwasser reduziert, was einen beruhigenden Effekt auf das fallende Abwasser hat und dieses somit schneller den Rückstauverschluss durchlaufen kann. Dies reduziert das Risiko, dass sich ein zu turbulentes Abwasser-Luft-Gemisch bildet, was sich im Rückstauverschluss staut und in die Ventilstößelführung eindringt.

In einer bevorzugten optionalen Ausführungsform ist die Abwasserleitfläche zumindest teilweise haubenförmig ausgebildet. Gerade eine Haubenform hat besonders gute Ergebnisse beim Turbulenzreduzieren des fallenden Abwasserstrahls hervorgebracht.

In einer weiteren, besonders vorteilhaften optionalen Ausführungsform ragt ein Teil des Ventilstößels in der voll geöffneten Stellung in eine von der Abwasserleitfläche gebildete Haube hinein. Dies erlaubt es, dass das fallende Abwasser auch bei voll geöffneten Ventilstößel, wenn die Intensität des Fallstrahls besonders groß ist, zuverlässig beruhigt und effizient durch den Rückstauverschluss geleitet wird.

In einer weiteren möglichen Ausführungsform weist ein der Ventilsitzöffnung gegenüberliegend angeordneter Wasserabführboden des Rückstauverschlusses eine Neigung hin zum Abwasserauslass auf. Hierdurch kann der Abwasserauslass außerhalb der Flucht mit der Ventilsitzöffnung angeordnet werden und somit die Aufbauhöhe des Rückstauverschlusses reduziert werden, wobei das Abwasser und Verschmutzungen immer noch zuverlässig hin zum Abwasserauslass abgeführt werden.

In einer vorteilhaften, optionalen Weiterbildung der Erfindung kann zumindest ein Großteil des Wasserabführbodens als Rutsche hin zum Abwasserauslass ausgebildet sein. Dies verbessert nochmals die zuverlässige und schnelle Ausleitung des Abwassers und verhindert das Anhaften von Verschmutzungen unter Zuhilfenahme der Schwerkraft bei einem seitlichen Abwasserauslass. In weiterhin optionalen Ausführungsformen ist der gesamte Wasserabführboden oder nahezu der gesamte Wasserabführboden als eine derartige Rutsche ausgebildet.

In einer vorteilhaften optionalen Ausführungsform stützt sich die Führung am Wasserabführboden ab.

Hierdurch kann der Bereich der Ventileinheit frei von die Führung stützenden Bauteilen gehalten werden, da die Führung vom unteren Gehäuseboden her kommend gestützt wird. Dies verringert das Risiko des Anhaftens von Schmutzteilen im Bereich der Ventileinheit.

In einer optionalen Ausführungsform stützt sich die Führung an einem eine Neigung aufweisenden Wasserabführboden ab. In dieser Ausführungsform ermöglicht es die Neigung des Wasserabführbodens in vorteilhafter Weise, die Führung näher an die Ventilsitzöffnung zu positionieren, obwohl die Führung am Gehäuseboden angebracht ist. Hierdurch kann die Führung kürzer ausgeführt werden, was das Verschmutzungsrisiko und den Abschirmaufwand für die Führung reduziert.

Vorteilhafterweise kann in einer weiteren möglichen Ausführungsform der Rückstauverschluss an der Ventilsitzöffnung eine sprungartige Abwasserdurchtrittsflächenaufweitung aufweisen.

Ein sprungartiges Aufweiten der Abwasserdurchtrittsfläche in Richtung des Abwasserdurchlasspfades schafft an der Ventilsitzöffnung einen Ventileffekt, welcher das Anhaften von Verschmutzungen im Ventilbereich reduziert.

Der Ventileffekt kommt besonders in Ausführungsformen zum Tragen, bei denen der Ventilstößel standardmäßig geschlossen ist und das Abwasser oberhalb der Ventilsitzöffnung unter Druck steht. In einem solchen Fall wird das Abwasser an der Abwasserdurchtrittsflächenaufweitung in eine drucklose Freispiegelentwässerung überführt.

In weiteren optionalen Ausführungsformen weitet sich die Abwasserdurchtrittsfläche für das durchströmende Abwasser sprungartig um mindesten 25% auf, insbesondere um mindestens 50% auf, insbesondere um mindestens 75% auf.

Ein optionales Aufweiten um mindestens 25% reduziert bereits Ablagerungen besonders gut, was durch das Aufweiten von mindestens 50% nochmals gesteigert werden kann und bei mindestens 75% nochmals bessere Resultate sicherstellt.

In einer weiteren, besonders vorteilhaften optionalen Ausführungsform ist zumindest ein Teil der Führung des Ventilstößels in einem Becher angeordnet, welcher in Richtung entgegen der Ventilsitzöffnung geschlossenen ist und in Richtung hin zur Ventilsitzöffnung geöffnet ist, wobei die Becheröffnung im abgeschirmten Bereich liegt.

Die Anordnung zumindest eines Teils der Führung in einem derartigen Becher reduziert nochmals in besonderer Weise die Verschmutzungsgefahr für die Führung und verbessert somit die Einsatzzuverlässigkeit des Rückstauverschlusses. Zudem bildet der Rand der Becheröffnung einen Damm, welcher die Führung bei einer Abwasserrückstausituation vor dem Kontakt mit dem Rückstauabwasser zusätzlich schützt.

Bei einer optionalen Ausführung, bei welcher die Becheröffnung zumindest in der voll geöffneten Stellung des Ventilstößels im Hohlraum des Ventilstößels liegt, ist das Verschmutzungsrisiko durch von der Ventilsitzöffnung fallendes Abwasser wie auch im Rückstaufall nochmals reduziert. Im Falle eines Rückstaus deswegen, da der Hohlraum durch den Taucherglockeneffekt dem Ansteigen von Rückstauabwasser Richtung Becheröffnung entgegenwirkt.

In einer weiterhin optionalen Ausführungsform liegt die Becheröffnung sowohl in der voll geöffneten Stellung als auch in der geschlossenen Stellung des Ventilstößels im Hohlraum des Ventilstößels. Die verstärkt die zuvor genannten Schutzeffekte nochmals.

In einer weiteren optionalen Ausführungsform ist der Becher zum Ventilstößel so angeordnet, dass eine Bewegung des Ventilstößels von der geschlossenen Stellung in Richtung der voll geöffneten Stellung eine Verringerung des Abstands zwischen der Becheröffnung und der Decke des Hohlraums bewirkt.

Dies bewirkt in vorteilhafter Weise, dass ein zunehmender Abwasserstrom durch die Ventilsitzöffnung den Schutz des Becherinnenraums vor eindringendem Abwasser verstärkt.

In einer besonders vorteilhaften optionalen Ausführungsform der vorliegenden Erfindung wird der Ventilstößel selbsttätig in der geschlossenen Stellung gehalten und öffnet bei einem Abwasserdurchlassereignis selbsttätig.

Dies bewirkt die Ausbildung eines besonders großen Luftpolsters auslassseitig zur geschlossenen Ventilsitzöffnung im Rückstaufall, auch bei einem schleichend steigendem Rückstaupegel, und schützt somit die Führung und andere funktionsrelevante Teile vor Kontakt und Verschmutzung mit Rückstauabwasser.

Das selbsttätige Öffnen stellt das Durchleiten von einlassseitig am Dichtstößel ankommenden Abwasser in Richtung des Abwasserdurchlasspfades sicher.

In einer weiterhin optionalen Ausführungsform ist ein Federelement im abgeschirmten Bereich angeordnet, welches den Ventilstößel in die geschlossene Stellung drückt und bei einem Abwasserdurchlassereignis selbsttätig öffnen lässt.

Hierbei wird das selbsttätige Öffnen und Schließen durch ein Federelement bewirkt, wobei dieses im abgeschirmten Bereich vor dem Abwasserstrahl geschützt ist.

Vorteilhafterweise ist das zuvor genannte Federelement im zuvor genannten Becher angeordnet.

Dies erhöht nochmals den Schutz des Federelements sowohl vor dem Abwasserstrahl als auch vor Rückstauabwasser.

In einer weiteren, optionalen Ausführungsform sind die Abwassereinlassöffnung und/oder die Abwasserauslassöffnung zur Ventilsitzöffnung winklig angeordnet.

Eine winkelige Anordnung der Abwassereinlassöffnung, der Abwasserauslassöffnung oder beider zur Ventilsitzöffnung des vertikalen Rückstauverschlusses ermöglichen kompakte Richtungsänderungen bei den Rohranschlüssen. Somit kann der Rückstauverschluss beispielsweise direkt unterhalb der Raumdecke montiert werden, ohne dass oberhalb und unterhalb des vertikalen Rückstauverschlusses zusätzliche vertikale Rohrstrecken benötigt werden.

Das zuvor Beschriebene gilt insbesondere bei einer orthogonalen oder nahezu orthogonalen Anordnung.

In einer weiteren, optionalen Ausführungsform weist der Rückstauverschluss in vertikaler Einbauorientierung an seiner Oberseite einen Deckenmontageabschnitt auf.

Hierdurch wird die Montage an dem vor Ort verfügbaren, höchsten geodätischen Niveau, der Raumdecke, erleichtert und sichergestellt.

Dies erhöht die Wirksamkeit des Rückstauverschlusses im Rückstaufall und verhindert Fehlmontagen.

Eine weitere, optionale Ausführungsform der Erfindung betrifft ein besonders zuverlässiges Abwasserhebesystem aufweisend einen Rückstauverschluss gemäß einer der vorherigen Ausführungsformen.

Hierbei wird ein Abwasserhebesystem vorgeschlagen, aufweisend eine Abwasserhebeanlage mit einer Abwasserförderleitung, wobei die Abwasserhebeanlage dazu eingerichtet ist, Abwasser durch die Abwasserförderleitung in Abwasserförderrichtung von einem geodätisch tieferliegenden Niveau hin zu einem geodätisch höherliegenden Entwässerungsniveau zu pumpen, wobei die Abwasserförderleitung in Abwasserförderrichtung einen Steigleitungsabschnitt aufweist, einen Bogenleitungsabschnitt mit einem Scheitelniveau der Abwasserförderleitung, und einen Fallleitungsabschnitt, in welchem sich Abwasser in Schwerkraftrichtung bewegt, das Abwasserhebesystem weiterhin aufweisend einen Rückstauverschluss gemäß einem der hier zuvor beschriebenen Ausführungsformen, wobei der Fallleitungsabschnitt den Rückstauverschluss aufweist.

Es hat sich überraschend gezeigt, dass eine Anordnung, in der der Fallleitungsabschnitt den Rückstauverschluss aufweist, die Hebeanlage nach dem Stoppen einer Hebeaktivität vor einem zu starken Rückschlag der Abwassersäule schützt und gleichzeitig wird der Rückstauverschluss im Hebebetrieb mit Abwasser besonders kräftig durchspült, wodurch dieser vor anhaftenden Verschmutzungen bewahrt wird und zuverlässig einsatzfähig bleibt. Hinzu kommen die hier bereits zuvor erläuterten Vorteile des erfindungsgemäßen Rückstauverschlusses, welche in Summe ein besonders zuverlässiges Abwasserhebesystem schaffen.

In optionalen Ausführungsformen der zuvor genannten Ausführungsformen des erfindungsgemäßen Rückstauverschlusses erstreckt sich die die Haupterstreckungsachse des Rückstauverschlusses in der Einbauorientierung entlang der Vertikalen und verläuft hierbei in Schwerkraftrichtung. Steile Winkelabweichungen der Haupterstreckungsachse in der Einbauorientierung von bis zu 20° zur Vertikalen, insbesondere von bis zu 5° zur Vertikalen, sind in weiteren Ausführungsformen der Erfindung ebenfalls miteingeschlossen.

In weiteren optionalen Ausführungen all der zuvor genannten Ausführungsformen der Erfindung ist die Abwasserförderleitung des erfindungsgemäßen Abwasserhebesystems von der Hebeanlage bis hin zum Rückstauverschluss, insbesondere zumindest bis hin zur Dichtebene des Rückstauverschlusses, unbelüftet.

Diese verbessert die rückschlagdämpfende Wirkung sowie die Reaktionsgeschwindigkeit des Systems durch sich besonders schnell aufbauende Druckdifferenzen.

In weiteren optionalen Ausführungen all der zuvor genannten Ausführungsformen der Erfindung ist besagte Abwasserförderleitung von der Hebeanlage bis hin zur Einmündung in eine hierarchisch übergeordnete Abwasserfallleitung, beispielsweise in die zentrale Abwasserfallleitung eines Gebäudes, nicht belüftet.

In weiteren optionalen Ausführungen all der zuvor genannten Ausführungsformen der Erfindung liegt das Scheitelniveau der Abwasserförderleitung geodätisch oberhalb der örtlichen Rückstauebene. In weiteren optionalen, alternativen Ausführungsformen all der zuvor genannten Ausführungsformen der Erfindung liegt das Scheitelniveau der Abwasserförderleitung geodätisch unterhalb der örtlichen Rückstauebene.

In bevorzugten optionalen Ausführungsformen des zuvor genannten Abwasserhebesystems der Erfindung erstreckt sich die Erstreckungsachse des erfindungsgemäßen Fallleitungsabschnitts entlang der Vertikalen und verläuft hierbei in Schwerkraftrichtung. Steile Winkelabweichungen der Erstreckungsachse des Fallleitungsabschnitts von bis zu 20° zur Vertikalen, insbesondere von bis zu 5° zur Vertikalen, sind in weiteren Ausführungsformen der Erfindung ebenfalls miteingeschlossen.

Sämtliche der hier zuvor beschriebenen Ausführungsformen sind beliebig miteinander kombinierbar.

Nachfolgend werden anhand von Figuren Vorteile und Funktionen der Erfindung näher erläutert, wobei die Figuren mögliche Ausführungsformen der Erfindung zeigen, welche in vorteilhafter Weise zuvor genannte Ausführungsformen kombinieren. Einige funktionsgleiche Merkmale sind hierbei der Übersichtlichkeit halber mit gleichen Referenzzeichen versehen.

Es zeigen
Figur 1 einen Querschnitt durch einen erfindungsgemäßen Rückstauverschluss in seiner Einbauorientierung mit seinem Ventilstößel in geschlossener Stellung, geschnitten entlang der zentralen Haupterstreckungsachse des Rückstauverschlusses, welche hier vertikal liegt,
Figur 2 zeigt den Rückstauverschluss aus Fig. 1 mit dem Ventilstößel in voll geöffneter Stellung,
Figur 3 zeigt eine perspektivische Ansicht von schräg oben auf den isoliert gezeigten Ventilstößel, in geschlossener Stellung, samt dem isoliert gezeigten Rückstauverschlussboden,
Figur 4 zeigt einen geschnittenen oberen Ausschnitt aus Fig. 3, geschnitten entlang der Haupterstreckungsachse des Rückstauverschlusses,
Figur 5 zeigt eine Ausführungsform eines erfindungsgemäßen Abwasserhebesystems mit einem erfindungsgemäßen Rückstauverschluss.

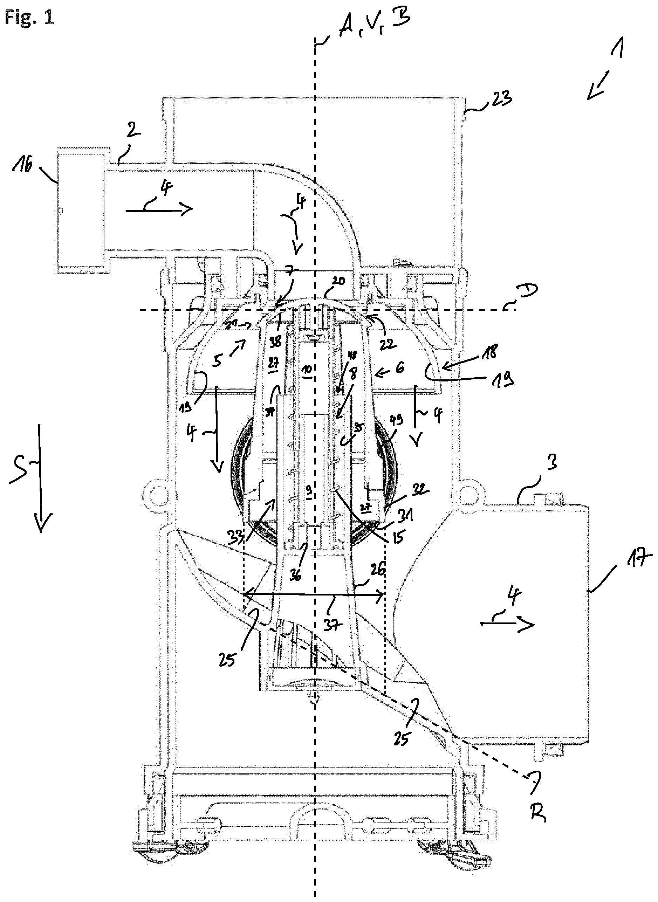

Figur 1 zeigt eine Ausführungsform eines erfindungsgemäßen Rückstauverschlusses 1 in einer Schnittansicht, geschnitten zentral entlang der Haupterstreckungsachse A des Rückstauverschlusses 1.

Der Rückstauverschluss 1 ist hier in seiner vertikalen Einbauorientierung gezeigt. Die Haupterstreckungsachse A des in seiner Grundform zylindrisch gestalteten Rückstauverschlusses 1 liegt hier vertikal bzw. zusammenfallend mit der Vertikalen V und entsprechend parallel zur Schwerkraftrichtung S.

In seinem oberen Bereich weist der Rückstauverschluss 1 einen hier als Stutzen ausgebildeten Abwassereinlass 2 auf. In seinem unteren Bereich weist der Rückstauverschluss 1 einen hier als Stutzen ausgebildeten Abwasserauslass 3 auf. In der vertikalen Einbauorientierung liegt der Abwassereinlass 2 auf einem geodätisch höherem Niveau als der Abwasserauslass 3. Im Betrieb durchströmt Abwasser den Rückstauverschluss 1 in Richtung eines Abwasserdurchlasspfades 4 vom Abwassereinlass 2 zum Abwasserauslass 3.

Der Rückstauverschluss 1 weist eine schließbare Ventileinheit 5 auf, welche entlang des Abwasserdurchlasspfades 4 zwischen dem Abwassereinlass 2 und dem Abwasserauslass 3 angeordnet ist.

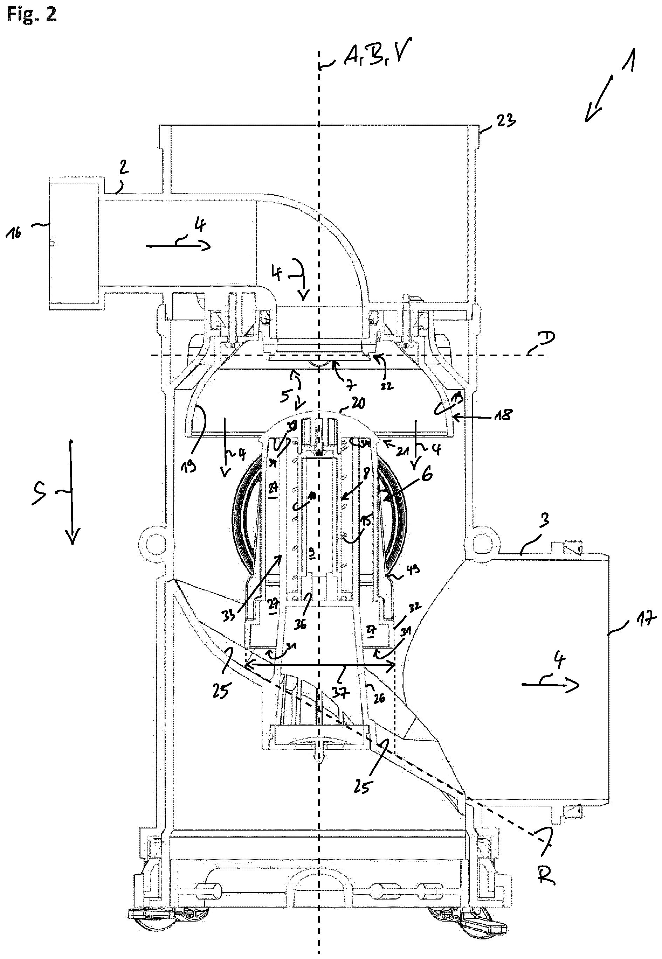

Die Ventileinheit 5 weist einen beweglich geführten Ventilstößel 6 auf sowie eine Ventilsitzöffnung 7. Ventilstößel 6 und Ventilsitzöffnung 7 spielen dichtend zusammen. Der Ventilstößel 6 ist entlang seiner Bewegungsachse B zwischen einer voll geöffneten Stellung und einer geschlossenen Stellung, in welcher er die Ventilsitzöffnung 7 dichtend verschließt, hin und her bewegbar. Figur 2 zeigt den Ventilstößel 6 in der voll geöffneten Stellung. Hierbei ist die Ventilsitzöffnung 7 vom Ventilstößel 6 freigegeben.

Die Bewegungsachse B des Ventilstößels 6 fällt in dieser Ausführungsform mit der Haupterstreckungsachse A des Rückstauverschlusses 1 zusammen und liegt orthogonal zur von der Ventilsitzöffnung 7 aufgespannten Dichtebene D des Rückstauverschlusses 1. In der Einbauorientierung liegt die Bewegungsachse B parallel bzw. zusammenfallend mit der Vertikalen V und somit parallel zur Schwerkraftrichtung S.

Der Rückstauverschluss 1 weist auslassseitig zur Ventilsitzöffnung 7 eine Führung 8 für den beweglichen Ventilstößel 6 auf. In der vorliegenden Ausführungsform ist die Führung 8 eine Linearführung, hier in der besonderen Variante einer beweglichen Teleskopführung. Andere Führungsvarianten sind in weiteren Ausführungsformen ebenfalls denkbar, beispielsweise eine Feder-Nut-Linearführung zwischen dem Ventilstößel 6 und einem stationären Führungselement.

Die Führung 8 führt den beweglichen Ventilstößel 6 entlang seiner Bewegungsachse B zwischen der geschlossenen und der voll geöffneten Stellung. Die Führung 8 hat hierbei eine untere, feststehende Hülse 9 und eine obere, bewegliche Hülse 10, welche mit ihrem einen Ende 11 mit einer Unterseite des Ventilstößels 6, hier mit der Decke 38 im Hohlraum 27, fest verbunden ist und mit ihrem gegenüberliegenden Endabschnitt 12 die feststehende Hülse 9 entlang der Bewegungsachse B abschnittsweise umfasst, wobei die gegeneinander gleitenden Kontaktflächen 13, 14 der feststehenden Hülse 9 und der beweglichen Hülse 10 die Bewegung des Ventilstößels 6 führen, sodass die begliche Hülse 10 hierbei zusammen mit dem Ventilstößel 6 entlang der Bewegungsachse B hin und her gleiten kann.

Ein Federelement 15, in dieser Ausführungsform in Form einer Spiralfeder, drückt den Ventilstößel 6 in die geschlossene Stellung.

Das Federelement 15 schließt und hält den Ventilstößel 6 selbsttätig in der geschlossenen Stellung und gibt bei einem Abwasserdurchlassereignis, wenn einlassseitig gegen den Ventilstößel 6 drückendes Abwasser die Federkraft überwindet, die Ventilsitzöffnung 7 durch eine Bewegung hin zur voll geöffneten Stellung frei, sodass das Abwasser entlang des Abwasserdurchlasspfades 4 hin zum Abwasserauslass 3 strömen kann.

Die Öffnungskraft des Federelements in der geschlossenen Stellung des Ventilstößels liegt in möglichen Ausführungsformen im Bereich vom 1 Newton bis 10 Newton, insbesondere im Bereich von 1,5 Newton bis 5 Newton, abhängig von der Ventilsitzöffnungsfläche.

In weitere möglichen Ausführungsformen öffnet der Ventilstößel bei einem einlassseitig anliegenden Abwasserdruck an der Ventilsitzöffnung im Bereich von 0,1 bar bis 1 bar, insbesondere im Bereich von 0,15 bar bis 0,5 bar.

In der gezeigten Ausführungsform hat die Ventilsitzöffnung einen Durchmesser von 54mm. In weiteren Ausführungsformen liegt der Durchmesser der Ventilsitzöffnung im Bereich von 30mm bis 100mm, insbesondere im Bereich von 40mm bis 70mm.

In dieser Ausführungsform liegen sowohl die Abwassereinlassöffnung 16 als auch die Abwasserauslassöffnung 17 senkrecht oder nahezu senkrecht zur sich hier horizontal erstreckenden Ventilsitzöffnung 7. Entsprechend zeigen die hierzu zugehörigen Stutzen in entgegengesetzte horizontale Richtungen.

In anderen, nicht gezeigten Ausführungsformen liegen die Abwassereinlassöffnung 16 und/oder die Abwasserauslassöffnung 17 parallel zur Ventilsitzöffnung 7, entsprechend zeigen in diesen Ausführungsformen Abwassereinlass 2 und/oder Abwasserauslass 3 in Richtung entlang der Haupterstreckungsachse A.

Der Abwasserdurchlasspfad 4 verläuft in dieser Ausführungsform im Bereich des Abwassereinlasses 2 senkrecht zur Haupterstreckungsachse A, im Bereich der Ventilsitzöffnung 7 entlang der Haupterstreckungsachse A, also in vertikaler Einbauorientierung in Schwerkraftrichtung S, und im Bereich des Abwasserauslasses 3 senkrecht zur Haupterstreckungsachse A.

Wie in Figuren 1 und 2 ebenfalls gezeigt ist, weist der Rückstauverschluss 1 im Bereich der Ventilsitzöffnung 7 eine Abwasserleithaube 18 auf. Die Abwasserleithaube 18 umgibt in dieser Ausführungsform die Ventilsitzöffnung 7 an ihrer Auslassseite. Die kuppelartige Innenfläche der Abwasserleithaube 18 stellt hierbei eine Abwasserleitfläche 19 bereit, welche durch die Ventilsitzöffnung 7 strömendes Abwasser beruhigt und turbulenzreduziert am geöffneten Ventilstößel 6 in Schwerkraftrichtung S vorbeileitet.

In dieser Ausführungsform ist die Abwasserleitfläche 19 kuppelartig in Richtung des Abwasserdurchlasspfades 4 gekrümmt und ist hierbei in ihrer Krümmungsrichtung in etwa korrespondierend zu der der Ventilsitzöffnung 7 gegenüberliegenden Kuppe 20 des Ventilstößelkopfes 21 ausgeführt, welcher später noch näher erläutert wird. Die Abwasserleithaube 18 und die Kuppe 20 sowie die Ventilsitzöffnung 7 haben in dieser Ausführungsform eine gemeinsame rotationssymmetrische Achse, hier zusammenfallend mit der Haupterstreckungsachse A.

Fig. 2 zeigt weiterhin, dass in der voll geöffneten Stellung des Ventilstößels 6 ein oberer Teil des Ventilstößels, hier die Kuppe 20, in die Abwasserleithaube 18 entlang der Haupterstreckungsachse A und somit entlang der Bewegungsachse B, hineinragt.

Wie man in Fig. 2 ebenfalls gut erkennen kann, wird in dieser Ausführungsform an der Ventilsitzöffnung 7 eine sprungartige Abwasserdurchtrittsflächenaufweitung 22, hier eine sprungartig horizontale Aufweitung in der lichten Weite um ca. 100%, unterhalb der Ventilsitzöffnung 7 und somit unterhalb der Dichtebene D realisiert. Prozentual geringere Aufweitungen von mind. 25% sind jedoch in anderen Ausführungsformen ebenfalls denkbar. Die lichte Weite in der Horizontalen springt hier direkt unterhalb der Dichtebene D auf die gekrümmte Abwasserleitfläche 19 der Abwasserleithaube 18.

Die Figuren 1 und 2 zeigen weiterhin einen Deckenmontageabschnitt 23, hier mit einem Montageflansch (nicht gezeigt) mit Durchgangsbohrungen, welchen der Rückstauverschluss 1 in vertikaler Einbauorientierung an seiner Oberseite aufweist und der dazu eingerichtet ist, den Rückstauverschluss 1 direkt an eine Raumdecke 24 montieren zu können.

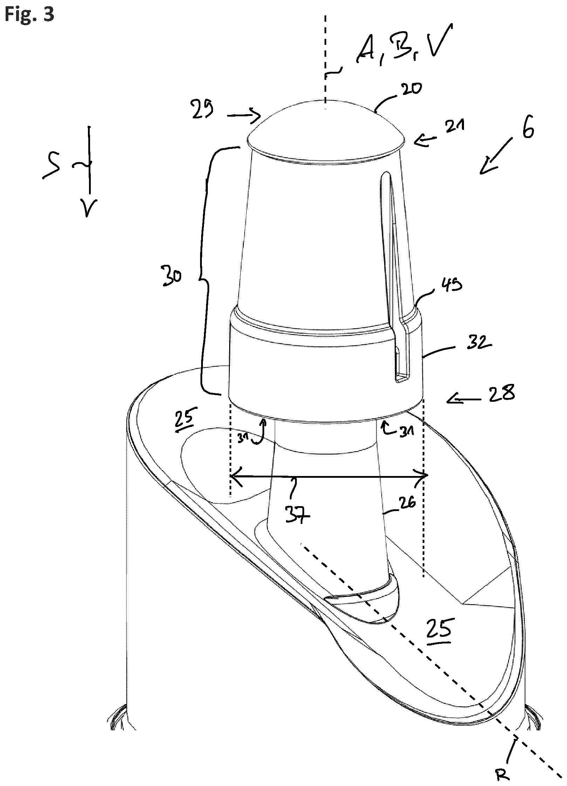

Figur 3 zeigt eine perspektivische, isolierte Ansicht von schräg oben auf den Ventilstößel 6 und den darunterliegenden, hier als konkave Rinnen-Rutsche ausgebildeten Wasserabführboden 25. Zumindest Abschnitte der konkaven Rinnen-Rutsche bilden eine Erstreckungsachse R, welche hin zum Abwasserauslass 3 geneigt ist, wie in Fig. 1 und 2 gut zu sehen ist. Querschnitte durch die Rinne 25 parallel zur Haupterstreckungsachse A sind hierbei entlang der Achse R U-förmig. Die Erstreckungsachse R bildet hier mit der Haupterstreckungsachse A einen spitzen Winkel von ca. 50°. In anderen Ausführungsformen kann der spitze Winkel im Bereich von 85° bis 20° liegen.

Der Ventilstößel 6 steht hierbei über die Führung 8 auf einem vom Wasserabführboden 25 entlang der Haupterstreckungsachse A hervorstehenden Podest 26. Die Führung 8, und somit auch der Ventilstößel 6, stützen sich in dieser Ausführungsform über das Podest 26 am Wasserabführboden 25 ab.

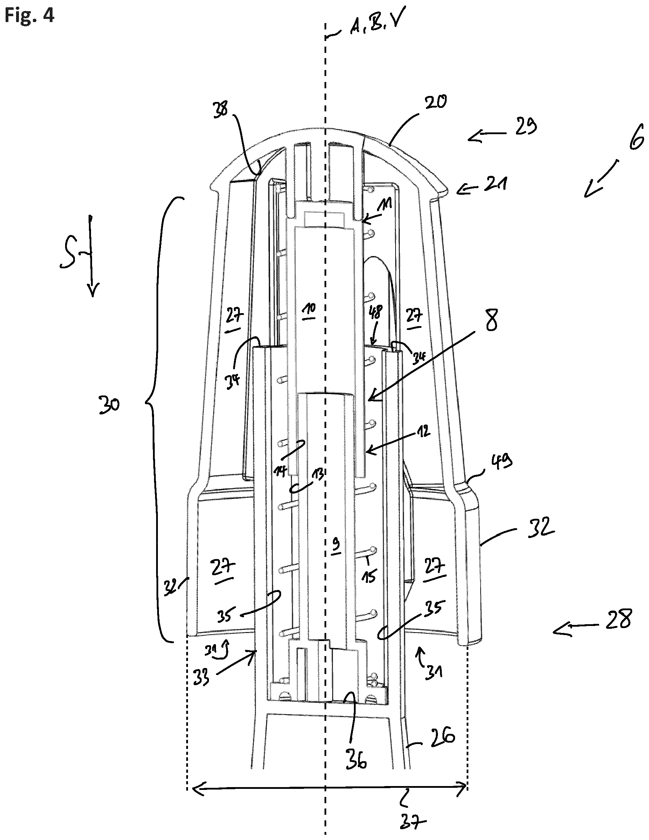

Fig. 4 zeigt eine Schnittansicht, geschnitten entlang der Haupterstreckungsachse A, des oberen Bereichs aus Fig. 3 und somit auch geschnitten entlang der Bewegungsachse B des Ventilstößels 6.

Wie in der Zusammenschau von Fig. 3 und Fig. 4 gut zu sehen ist, bildet der Ventilstößel 6 durch seinen inneren Hohlraum 27 eine Tauchglocke. Der Ventilstößel 6 weist in dieser Ausführungsform einen sich entlang der Bewegungsachse B erstreckenden, im allgemeinen etwa rotationssymmetrischen Hohlkörper auf, welcher nur an seinem unteren Ende 28 geöffnet ist und ansonsten bis hin zu seinem gegenüberliegenden oberen Ende 29 durchgehend geschlossen ist. Der Hauptabschnitt des Ventilstößels 6 weist hierbei einen langgezogenen Mantelabschnitt 30 auf, welcher sich entlang der Bewegungsachse B zumindest in seinem oberen Abschnitt hin zum Ventilstößelkopf 21 verjüngt, wobei sich der Ventilstößelkopf 21 hin pilzkopfartig nach oben aufweitet und in die Kuppe 20 übergeht, welche in der geschlossenen Stellung in die Ventilsitzöffnung 7 teilweise einfährt und mit dieser abdichtet, wie in Fig. 1 gut zu sehen ist.

Der Mantelabschnitt 30 weist im Bereich der unteren Öffnung 31 des Ventilstößels 6 einen Abschnittsbereich 32 auf, begrenzt an seinem oberen Ende durch eine Stufe 49, welche den Mantelabschnitt 30 im Durchmesser verjüngt, sodass der untere Abschnittsbereich 32 im Querschnitt eine etwas weiter geöffnete Schürze bildet.

Der innere Hohlraum 27 des Ventilstößels 6 verjüngt sich, grob der äußeren Stößel-Kontur folgend, in dieser Ausführungsform zumindest oberhalb der Schürze 32 bis hin zum Kopf 21, wie in Fig. 4 gut zu sehen ist.

In Fig. 4 ist weiterhin die teleskopartige Linearführung 8 gut zusehen, welche in dieser Ausführungsform in einem Becher 33 angeordnet ist, welcher auf der Oberseite des Podests 26 fest angeordnet ist und nur nach oben hin, also in Richtung der Ventilsitzöffnung 7, offen ist und ansonsten geschlossen ist. Der obere Öffnungsrand 34 des Bechers 33 bildet einen Damm gegen im Rückstaufall von unten, also entgegen der Richtung des Abwasserdurchlasspfades 4, ansteigendes Abwasser. Der Becher 34 bietet jedoch auch zusätzlichen Spritzschutz vor dem von der Ventilsitzöffnung 7 kommenden Abwasserstrahl.

Ebenfalls in Fig. 4 gut zu sehen, ist das Federelement 15, welches ebenfalls im Becher 33 angeordnet ist, genauer, zwischen der hier mehrteiligen Führung 8 und der Becherinnenwandung 35.

Das Federelement 15 stützt sicher hierbei mit seinem einen Ende an einem Fuß der unteren Hülse 9 ab, welche auf dem Boden 36 des Bechers 33 sitzt, und stützt sich somit über das Podest 26 am Wasserabführboden 25 ab.

Das andere Ende des Federelements 15 stützt sich an der innenliegenden Seite des Ventilstößelkopfes 21 und somit an der Decke 38 des Hohlraums 27 ab.

Wenn man beispielsweise auf die Figuren 1 und 2 blickt, so ist der durch den Ventilstößel 6 zur Ventilsitzöffnung 7 hin abgeschirmte Bereich 37 durch den Projektionsschatten des Ventilstößels 6 in Richtung entgegen der Ventilsitzöffnung 7 bereitgestellt.

Zusätzlich ist in dieser Ausführungsform die Führung 8 in der geschlossenen Stellung des Ventilstößels 6 teilweise im Hohlraum 27 positioniert und in der geöffneten Stellung vollständig im Hohlraum 27 positioniert, wenn man dies quer zum Abwasserdurchlasspfad 4 an dieser Stelle betrachtet, und somit parallel zur Ventilsitzöffnung 7 betrachtet, wie in Fig. 2 gut zu sehen ist.

In der voll geöffneten Stellung des Ventilstößels 6 kommt der Rand 34 der Becheröffnung 48 in Anschlag mit der Decke 38 des Hohlraums 38 des Ventilstößels 6, wie in Fig. 2 ebenfalls gut zu sehen ist, oder der Decke 38 zumindest nahe. In der geschlossenen Stellung des Ventilstößels 6 liegt die Becheröffnung 48 in dieser Ausführungsform von Fig. 1 oberhalb des halben vertikalen Erstreckungsweges des Hohlraums 27.

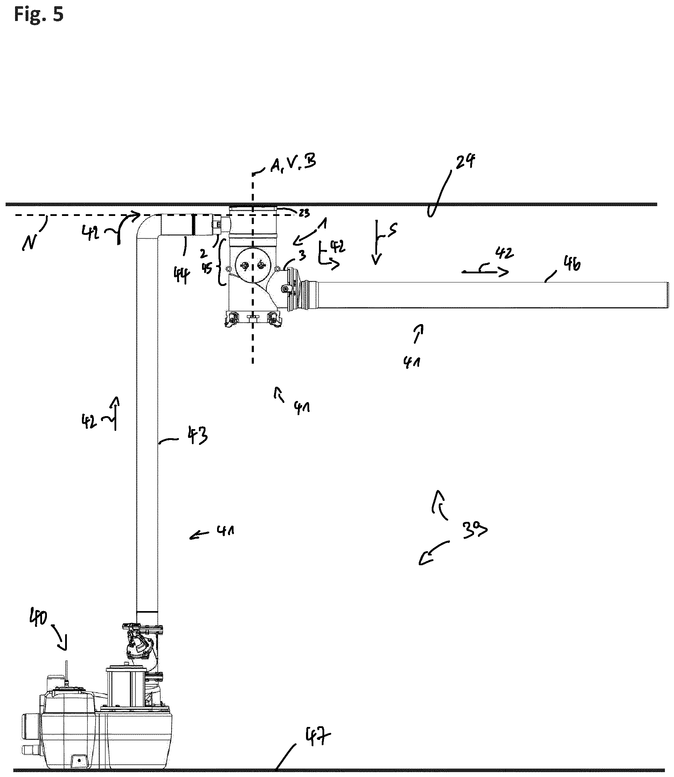

Figur 5 zeigt eine Ausführungsform eines erfindungsgemäßen Abwasserhebesystems 39 mit einem erfindungsgemäßen Rückstauverschluss 1.

Das Abwasserhebesystem 39 weist eine Abwasserhebeanlage 40, eine Abwasserförderleitung 41 und den Rückstauverschluss 1 auf.

Die Abwasserhebeanlage 40 ist dazu eingerichtet, Abwasser durch die Abwasserförderleitung 41 bzw. durch die Abwasserförderrohrleitung in Abwasserförderrichtung 42 von einem geodätisch tieferliegenden Niveau hin zu einem geodätisch höherliegenden Entwässerungsniveau zu pumpen.

Im vorliegenden Fall ist die Hebeanlage 40 dazu eingerichtet, häusliches Abwasser, einschließlich fäkalienhaltigen Abwassers, zu pumpen.

Die Hebeanlage 40 ist an ihrem Druckausgang mit dem Beginn der Abwasserförderleitung 41 verbunden. Den Beginn der Abwasserförderleitung 41 bildet ein vertikal ausgerichteter Steigleitungsabschnitt 43, der an seinem Ende in einen Bogenleitungsabschnitt 44 übergeht, welcher das Scheitelniveau N der Abwasserförderleitung 41 aufweist.

Am in Abwasserförderrichtung 42 betrachteten Ende des Bogenleitungsabschnitts 44 geht der Bogenleitungsabschnitt in einen vertikal orientierten Fallleitungsabschnitt 45 über, welcher hier den Rückstauverschluss 1 aufweist. In der vorliegenden Ausführungsform ist der Fallleitungsabschnitt 45 der Abwasserförderleitung 41 vollständig im Rückstauverschluss 1 ausgebildet.

Im vertikalen Fallleitungsabschnitt 45, also hier im Rückstauverschluss 2, bewegt sich das im Hebebetrieb von der Hebeanlage 40 kommende Abwasser in Schwerkraftrichtung S. In Anschluss an den Abwasserauslass 3 des Rückstauverschlusses folgt eine geradlinige Gefälleleitung 46 (mit hier ca. 2% Gefälle), welche mittels Schwerkraft hin zu einem hierarchisch übergeordneten Abwasserkanal (nicht dargestellt), genauer hin zur zentralen Abwasserfallleitung des Gebäudes, entwässert (nicht dargestellt).

Der Abwasserdurchlasspfad 4 des Rückstauverschlusses 1 bildet hier einen Teil des Abwasserbewegungspfades der Abwasserförderleitung 41.

In der vorliegenden Ausführungsform liegt das tieferliegende Niveau bei der Hebeanlage 40 kurz über dem Boden 47 des Installationsraumes und das höherliegende Niveau beim Scheitelniveau N der Abwasserförderleitung 41.

In der vorliegenden Ausführungsform ist der Steigleitungsabschnitt 43 als ein gerades vertikalverlaufendes Rohr ausgebildet. In nicht dargestellten Ausführungsformen verläuft der Steigleitungsabschnitt 43 beispielsweise treppenstufenartig, mit einer oder mehreren Stufen nach oben in Richtung Bogenleitungsabschnitt.

In nicht dargestellten, weiteren möglichen Ausführungsformen folgt der Fallleitungsabschnitt 45 nicht unmittelbar auf den Bogenleitungsabschnitt 44, sondern es liegen weitere Gefälleabschnitte der Abwasserförderleitung 41 zwischen Bogenleitungsabschnitt 44 und dem Fallleitungsabschnitt 45.

Nachfolgend werden Funktionen des erfindungsgemäßen Rückstauverschlusses 1 anhand der beschriebenen Ausführungsform kurz erläutert.

Im vorliegenden Rückstauverschluss 1, welcher in der gezeigten Ausführungsform ein Federelement 15 aufweist, ist der Ventilstößel 7 standardmäßig in einer geschlossenen Stellung. Wenn nun einlassseitig der Druck des Abwassers auf den Ventilstößel 6 die Schließkraft des Federelements 15 übersteigt, so bewegt sich der Ventilstößel 6 aus seiner geschlossenen Stellung entlang seiner hier vertikalen Bewegungsachse B in Richtung der vollständig geöffneten Stellung.

Hierbei gibt der Kopf 21 des Ventilstößels 6 die Ventilsitzöffnung 7 frei, sodass das Abwasser entlang des Abwasserdurchlasspfades 4 durch die Ventilsitzöffnung 7 strömt. Hierbei wird das Abwasser zumindest zu Beginn der Öffnungsbewegung des Ventilstößels 6, wenn der Abstand zwischen der Ventilsitzöffnung 7 und der Kuppe 20 des Stößelkopfes 21 noch vergleichsweise gering ist, radial nach außen gegen die Abwasserleitfläche gedrückt und von dieser hierbei beruhigt und in etwa wie bei der Fontäne eines Pilzbrunnens der Schwerkraft S folgend hin zum Wasserabführboden 25 geleitet, welcher das Abwasser über seine Rutschen-Rinne hin zum Abwasserauslass 3 befördert.

Die teleskopartige Linearführung 8 schiebt sich bei einer Öffnungsbewegung des Ventilstößels 6 zusammen und ist zu jeder Zeit im durch den Ventilstößel 6, hier insbesondere durch die Schürze 32 im abgeschirmten Bereich 37 gut vor dem Kontakt mit dem Abwasserstrahl bzw. der fallenden Abwasserfontäne geschützt.

Der Becher 33 schützt hierbei zusätzlich vor dem Eindringen von seitlichen Spritzwasser und der sich bei der Öffnungsbewegung verringernde Abstand zwischen Becheröffnungsrand 34 und Hohlraumdecke 38 trägt zusätzlich zum Schutz der Führung 8 bei. Dasselbe gilt hier ebenfalls für das im Becher 33 angeordnete Federelement 15.

Wenn der einlassseitige Abwasserdruck auf den Ventilstößel 6 geringer ist als die Federkraft, fährt der Ventilstößel 6 selbsttätig wieder in seine geschlossene Stellung.

Im Falle eines Abwasserrückstaus bildet sich unterhalb der geschlossenen Dichtebene D ein Luftpolster aus, sodass der Wasserpegel des sich rückstauenden Abwassers in dieser Ausführungsform an der Außenseite des geschlossenen Ventilstößels 6 maximal bis knapp oberhalb der Stufe 49 steigt. Im Hohlraum 27 des Ventilstößels 6 bleibt der Wasserpegel jedoch geringer als an der Außenseite, und somit weiterhin merklich unterhalb des Becheröffnungsrandes 34, weil sich der Hohlraum 27 nach oben hin verjüngt und sich somit das geringere Luftvolumen im Hohlraum 27 schneller als das äußere Luftpolster auf einen gleichen Druck wie der des sich rückstauenden Abwassers angleicht. Zudem bildet der nach unten offene Hohlraum 27 im Rückstaufall einen Auftriebskörper, welcher zusätzliche Schließkraft in Richtung des Ventilsitzes 7 bereitstellt.

Der Becheröffnungsrand 34 bildet somit im Rückstaufall einen schützenden Damm, welcher verhindert, dass wenn der Pegel des Rückstauabwassers in den Hohlraum 27 hineindrückt, die Führung 8 und auch das Federelement 15 in Kontakt mit dem Rückstauabwasser gelangen.

In Ausführungsformen (nicht dargestellt) ohne Federelement 15 ist der Ventilstößel 6 standardmäßig in der voll geöffneten Stellung, wobei hier die Führung 8 im geschützten abgeschirmten Bereich 37 liegt und zudem optional durch einen umgebenden Hohlraum 27 des Ventilstößels 6 sowie einen optionalen Becher 33 geschützt sein kann.

Im Rückstaufall bei einer solchen federelementlosen Ausführungsform wird der als Auftriebskörper wirkende Hohlraum 27 des Ventilstößels 6 in die geschlossene Stellung aufschwimmen und den Rückstauverschluss 1 verschließen. Bei einem schnell ansteigenden Rückstaupegel wird der Ventilstößel 6 bereits durch den den Rückstaupegel vorauseilenden Luftdruck bzw. durch die hierbei entgegen die Richtung des Abwasserdurchlasspfades 4 strömende Luftströmung im Rohr in den Ventilsitz 7 gedrückt. Auch hier bildet sich dann ein Luftpolster unterhalb der Dichtebene D aus, jedoch meist später und somit geringer als bei einem selbsttätig schließenden Ventilstößel. Die Führung 8 bleibt jedoch in dieser Ausführungsform durch den gleichzeitigen Taucherglockeneffekt des Hohlraums 27, gerade in Zusammenwirkung mit dem Becher 33 vom Rückstaupegel unberührt.

In dem in Fig. 5 gezeigten Abwasserhebesystem 39 verringert ein erfindungsgemäßer Rückstauverschluss 1 den Rückschlag der Abwassersäule auf die Hebeanlage 40, wenn der Hebebetrieb stoppt, weil ein rückstauartiges Rückströmen bzw. Rückfallen der Abwassersäule im Steigleitungsabschnitt 43 entgegen der Abwasserförderrichtung 42 vom Rückstauverschluss 1 unterbunden wird. Gleichzeitig wird der vertikale Rückstauverschluss 1 durch den Druck der Hebeanlage 40 besonders vorteilhaft durchspült. Bei der hier gezeigten Ausführungsform mit dem selbsttätig geschlossenen Ventilstößel 6 findet zudem an der Abwasserdurchtrittsflächenaufweitung 22 beim Öffnen des Ventilstößels 6 ein Übergang des darüber unter Druck stehenden Abwasser in eine drucklose und fallende Freispiegelentwässerung statt. Was durch den hierbei besonders ausgeprägten Ventileffekt den Rückstauverschluss 1 sauber hält.

Der Rückstauverschluss 1 ist in dieser Ausführung mit seinem Deckenmontageabschnitt 23 an die Decke 24 montiert und nutzt somit geschickt die maximal verfügbare geodätische Höhe am Installationsort.

## Patentansprüche

1. Rückstauverschluss (1) für den vertikalen Einbau in ein Abwasserrohrgefälle,
wobei der Rückstauverschluss (1) in Richtung seines Abwasserdurchlasspfades (4) einen Abwassereinlass (2) gefolgt von einem Abwasserauslass (3) aufweist, und der Abwasserdurchlasspfad (4) in einer vertikalen Einbauorientierung des Rückstauverschlusses (1) zumindest teilweise in Schwerkraftrichtung (S) zeigt,
wobei der Rückstauverschluss (1) eine schließbare Ventileinheit (5) zwischen Abwassereinlass (2) und Abwasserauslass (3) aufweist und die Ventileinheit (5) in einer vertikalen Einbauorientierung des Rückstauverschlusses (1) mittels eines dichtenden Zusammenspiels eines beweglich geführten Ventilstößels (6) mit einer Ventilsitzöffnung (7) einen Abwasserfluss in Richtung des Abwasserdurchlasspfades (4) erlaubt und in einer Rückstausituation in Richtung entgegen des Abwasserdurchlasspfades (4) sperrt,
**dadurch gekennzeichnet, dass** die Führung (8) des Ventilstößels (6) auslassseitig der Ventilsitzöffnung (7) in einem durch den Ventilstößel (6) zur Ventilsitzöffnung (7) hin abgeschirmten Bereich (37) angeordnet ist.

2. Rückstauverschluss (1) gemäß dem vorherigen Anspruch, wobei
der Ventilstößel (6) einen zur Ventilsitzöffnung (7) hin geschlossenen und in Richtung entgegen der Ventilsitzöffnung (7) hin offenen Hohlraum (27) aufweist, wobei die Führung (8) zumindest teilweise im Hohlraum (27) positioniert ist.

3. Rückstauverschluss (1) gemäß Anspruch 2, wobei
die Führung (8) in der voll geöffneten Stellung des Ventilstößels (6), betrachtet quer zur Richtung des Abwasserdurchlasspfades (4) vollständig im Hohlraum (27) positioniert ist.

4. Rückstauverschluss (1) gemäß Anspruch 2 oder 3, wobei
sich der der Hohlraum (27) zumindest abschnittsweise hin zur Ventilsitzöffnung (7) verjüngt.

5. Rückstauverschluss (1) gemäß einem der vorherigen Ansprüche, wobei
im Bereich der Ventilsitzöffnung (7) eine Abwasserleitfläche (19) vorgesehen ist, welche durch die Ventilsitzöffnung (7) strömendes Abwasser turbulenzreduzierend an dem geöffneten Ventilstößel (6) vorbeileitet, insbesondere die Abwasserleitfläche (19) zumindest teilweise haubenförmig ausgebildet ist, besonders ein Teil des Ventilstößels (6) in der voll geöffneten Stellung in eine von der Abwasserleitfläche (19) gebildete Haube (18) hineinragt.

6. Rückstauverschluss (1) gemäß einem der vorherigen Ansprüche, wobei
ein der Ventilsitzöffnung (7) gegenüberliegend angeordneter Wasserabführboden (25) des Rückstauverschlusses eine Neigung hin zum Abwasserauslass (3) aufweist, insbesondere zumindest ein Großteil des Wasserabführbodens (25) als Rutsche hin zum Abwasserauslass (3) ausgebildet ist.

7. Rückstauverschluss (1) gemäß einem der vorherigen Ansprüche, wobei
sich die Führung (8) am Wasserabführboden (25) des Rückstauverschlusses (1) abstützt.

8. Rückstauverschluss (1) gemäß einem der vorherigen Ansprüche, wobei
der Rückstauverschluss (1) an der Ventilsitzöffnung (7) eine sprungartige Abwasserdurchtrittsflächenaufweitung (22) aufweist, insbesondere eine Aufweitung von mindestens 25%, bevorzugt von mindestens 50%, vorzugsweise von mindestens 75%.

9. Rückstauverschluss (1) gemäß einem der vorherigen Ansprüche, wobei
zumindest ein Teil der Führung (8) des Ventilstößels (6) in einem Becher (33) angeordnet ist, welcher in Richtung entgegen der Ventilsitzöffnung (7) geschlossenen ist und in Richtung hin zur Ventilsitzöffnung (7) geöffnet ist, wobei die Becheröffnung (48) im abgeschirmten Bereich (37) liegt, insbesondere die Becheröffnung (48) zumindest in der voll geöffneten Stellung des Ventilstößels (6) im Hohlraum (27) des Ventilstößels (6) liegt.

10. Rückstauverschluss (1) gemäß Anspruch 9, wobei
der Becher (33) zum Ventilstößel (6) so angeordnet ist, dass eine Bewegung des Ventilstößels (6) von der geschlossenen Stellung in Richtung der voll geöffneten Stellung eine Verringerung des Abstands zwischen der Becheröffnung (48) und der Decke (38) des Hohlraums (27) bewirkt.

11. Rückstauverschluss gemäß einem der vorherigen Ansprüche, wobei
der Ventilstößel (6) selbsttätig in der geschlossenen Stellung gehalten wird und bei einem Abwasserdurchlassereignis selbsttätig öffnet.

12. Rückstauverschluss (1) gemäß einem der vorherigen Ansprüche, wobei
ein Federelement (15) im abgeschirmten Bereich (37) angeordnet ist, welches den Ventilstößel (6) in die geschlossene Stellung drückt und bei einem Abwasserdurchlassereignis selbsttätig öffnen lässt.

13. Rückstauverschluss (1) nach Anspruch 12 und abhängig von Anspruch 9, wobei
das Federelement (15) in dem Becher (33) angeordnet ist.

14. Rückstauverschluss (1) gemäß einem der vorherigen Ansprüche, wobei
die Abwassereinlassöffnung (16) und/oder die Abwasserauslassöffnung (17) zur Ventilsitzöffnung (7) winklig angeordnet sind, insbesondere orthogonal oder nahezu orthogonal zur Ventilsitzöffnung (7) angeordnet sind, und/oder der Rückstauverschluss (1) in vertikaler Einbauorientierung an seiner Oberseite einen Deckenmontageabschnitt (23) aufweist.

15. Abwasserhebesystem (39), aufweisend
eine Abwasserhebeanlage (40) mit einer Abwasserförderleitung (41), wobei die Abwasserhebeanlage (40) dazu eingerichtet ist, Abwasser durch die Abwasserförderleitung (41) in Abwasserförderrichtung (42) von einem geodätisch tieferliegenden Niveau hin zu einem geodätisch höherliegenden Entwässerungsniveau (N) zu pumpen,
wobei die Abwasserförderleitung (41) in Abwasserförderrichtung (42) einen Steigleitungsabschnitt (43) aufweist, einen Bogenleitungsabschnitt (44) mit einem Scheitelniveau (N) der Abwasserförderleitung (41), und einen Fallleitungsabschnitt (45), in welchem sich Abwasser in Schwerkraftrichtung (S) bewegt,
das Abwasserhebesystem (39) weiterhin aufweisend einen Rückstauverschluss (1) gemäß einem der vorherigen Ansprüche, wobei der Fallleitungsabschnitt (45) den Rückstauverschluss (1) aufweist.
